# EUROPÄISCHE PATENTANMELDUNG

(11) **EP 2 269 766 A1**
(43) Veröffentlichungstag der Anmeldung: **05.01.2011**
(21) Anmeldenummer: 09008648.9
(22) Anmeldetag: 02.07.2009
(51) Int. Cl.: B23P 6/00, C23D 13/02

(54) **Verfahren zur Instandsetzung beschädigter emaillierter Behälter oder Behälterbestandteile**

(71) Anmelder: Roland Maurer Industriemontage GmbH, 67435 Neustadt/Weinstrasse (DE)
(72) Erfinder: Roland Maurer Industriemontage GmbH, 67435 Neustadt/Weinstrasse (DE)
(74) Vertreter: Patentanwälte Möll, Bitterich & Dr. Keller

(57) **Zusammenfassung**

Die Erfindung betrifft ein Verfahren zur Instandsetzung beschädigter emaillierter Behälter oder Behälterbestandteile (50), bei dem zunächst von der beschädigten Stelle des Behälters oder des Behälterbestandteils ein Formabdruck zur Erstellung eines Negativs angefertigt wird, mit diesem Negativ zur Herstellung eines sandwichartig aufgebauten Abdichtungs- oder Reparaturelementes zunächst eine Stahlplatte (30) an die Formgebung des Negativs mechanisch angepasst wird, die Stahlplatte (30) zumindest auf der Produktseite und an deren Rändern (34) mit einem Tantalüberzug (36) rissfrei ummantelt wird, und die Tantal-Stahlplatte (30, 36) zusammen mit einer Dichtungsplatte oder Dichtungsring (40) aus Polytetrafluorethen (PTFE) mittels mit Schrauben-Dichtungsringen (20) aus PTFE unterlegten Tantal-Schrauben (10) an der beschädigten Stelle des Behälters oder des Behälterbestandteils (50) befestigt wird.

## Beschreibung

Die vorliegende Erfindung betrifft ein Verfahren zur Instandsetzung beschädigter emaillierter Behälter oder Behälterbestandteile sowie ein dafür entwickeltes Abdichtungs- oder Reparaturelement.

Emaillierte Behälter oder Behälterbestandteile wie Rührwerke und Umwälzwerke werden in der chemischen und pharmazeutischen Industrie für die Durchführung verschiedener Prozessabläufe wie Synthesen und chemische Reaktionen eingesetzt. Die mit den Reaktionsstoffen oder Produkten in Kontakt stehenden Behälterteile (z.B. der Behälterinnenraum) sind mit einer Emaille-Schicht überzogen. Die hierfür eingesetzten technischen Emailles sind hochgezüchtete Gläser, die chemisch besonders resistent sind. Sie weisen eine hohe Thermoschockfestigkeit, Schlagfestigkeit sowie Korrosionsbeständigkeit über ein weites pH-Spektrum auf. Sie sind daher sowohl im sauren als auch alkalischen Bereich extrem widerstandsfähig. Die gesamte produktberührte Innenoberfläche wird in mehreren Bränden bis zu einer Emailleschichtstärke von etwa 2 mm beschichtet. Viele der heute verwendeten Behälter können ein Volumen von bis zu 120.000 I fassen. Die Behälter oder Behälterbestandteile, aber auch emaillierte Rohre oder Rohrleitungsbestandteile, werden völlig porenfrei ausgeführt, d.h. die mehrere Quadratmeter großen Behälterinnenflächen sind völlig frei von Defekten in der Emaille-Schicht. Auf diese Weise soll verhindert werden, dass die Reaktanten oder Syntheseprodukte den Behälter oder die Behälterwandung angreifen können.

Leider gelangen immer wieder im Laufe der chemischen oder pharmazeutischen Prozesse Fremdkörper in die Behälter und führen dadurch zu einer mechanischen Beschädigung der Emaille-Schicht. Ferner können auch Verfahrensfehler bei der Prozessdurchführung zu einer Beschädigung der Emaille-Schicht führen. Beispielsweise können Dampfzuflüsse bei hohen Drücken oder Temperatur zu punktuellen thermischen Spannungen führen, welche letztendlich die Emaille-Schicht aufplatzen lassen.

Ein Austausch von Behältern oder Behälterbestandteilen, deren Emaille-Schicht beschädigt ist, wäre mit enormen Kosten verbunden. Ferner muss die gesamte Anlage für die Zeit des Austausches stillgelegt werden. Dies ist unbefriedigend.

Man ist daher dazu übergegangen, Reparaturmethoden zu entwickeln, mit denen es möglich ist, speziell emaillierte Behälter, aber auch Behälterbestandteile instand zu setzen bzw. zu reparieren. Ein solches Verfahren ist beispielsweise in der DE 690 18 715 T2 beschrieben. Hinsichtlich des Reparatur- und Abdichtungselementes, das für die Instandsetzung von emaillierten Behälter oder emaillierten Behälterbestandteilen verwendet werden soll, werden hohe Anforderungen gestellt. Das Reparatur- oder Abdichtungselement muss chemisch resistent sein, d.h. über einen großen pH-Bereich Chemikalienbeständigkeit aufweisen, um keine Angriffsfläche für die in den einzelnen Behältern verarbeiteten Produkte, Stoffzusammensetzungen oder Stoffe zu bieten. Gleichzeitig muss das Reparatur- und Abdichtungselement passgenau auf die beschädigte Stelle der emaillierten Behälterschicht passen.

Es ist daher Aufgabe der vorliegenden Erfindung, ein Verfahren zur Instandsetzung beschädigter emaillierter oder Behälterbestandteile anzugeben, bei dem das verwendete Reparatur- oder Abdichtungselement zum einen Chemikalienbeständigkeit aufweist und zum anderen passgenau auf die Reparaturstelle aufsetzbar ist.

Diese Aufgabe wird gelöst durch ein Verfahren mit den Merkmalen des Anspruchs 1 sowie ein Reparatur- oder Abdichtungselement gemäß Anspruch 10.

Mit dem erfindungsgemäßen Verfahren ist es möglich, speziell emaillierte Behälter oder Behälterbestandteile instand zu setzen. Hierzu wird zunächst von der beschädigten Stelle des Behälters oder des Behälterbestandteils (z.B. Umwälzwerk, Rührwerk) ein Formabdruck zur Erstellung eines Negativs angefertigt. Der Formabdruck ist vorzugsweise ein Gipsabdruck. Auf diese Weise kann an der Reparaturstelle ein struktur- und formgenaues Bild von der Oberfläche gewonnen werden. Von diesem Formabdruck wird ein Negativ angefertigt. Das Negativ selbst ist ebenfalls ein Gipsabdruck. Mit Hilfe dieses Negativs wird zunächst eine Stahlplatte an die Formgebung des Negativs und damit die Oberflächenstrukturen der Reparaturstelle mechanisch angepasst. Die Stahlplatte nimmt hierbei die Form der Reparaturstelle an, so dass später im Montagezustand ein passgenaues und dichtes Anliegen des Reparatur- und Abdichtungselements erreicht wird. Vorzugsweise wird die Stahlplatte mechanisch auf einem Amboss, ggf. durch Erhitzung so lange verformt, dass sie den Strukturen des Negativs entspricht. Da die Stahlplatte selbst nicht chemikalienbeständig ist, wird sie zumindest auf der Produktseite sowie an deren Rändern mit einem Tantal-Überzug riss- und porenfrei ummantelt. Dadurch soll verhindert werden, dass Produkte den Stahl des Reparaturelements oder des Behälters angreifen. Die Produktseite ist die Seite, welche mit den Produkten, Stoffzusammensetzungen oder Stoffen im Behälterinneren in Kontakt steht.

Tantal ist ein unedles Metall und ist gegen eine Reihe von Stoffen chemikalienbeständig. In den meisten Säuren ist Tantal wegen der Passivierung nicht löslich, und auch Reaktionen mit Nicht-Metallen wie Sauerstoff oder Halogen finden erst bei Temperaturen von mehr als 300° C statt. Demnach ist es erforderlich sicherzustellen, dass der zu reparierende emaillierte Behälter oder Behälterbestandteil auch nur für Stoffe oder Stoffzusammensetzungen sowie Betriebsbedingungen eingesetzt wird, bei denen es nicht zu einer Umsetzung oder Zersetzung von Tantal kommt. Dies ist jedoch bei den meisten chemischen oder pharmazeutischen Prozessen der Fall. Bis zu einer Temperatur von 150° C ist Tantal selbst gegen starke Säuren wie Salzsäure, Salpetersäure, Schwefelsäure, Phosphorsäure, Chlorsäure, Chloressigsäure resistent. Aufgrund seiner Beständigkeit wird Tantal in der chemischen Industrie manchmal auch als Auskleidungsmaterial für Reaktionskessel, Wärmetauscher oder Pumpen verwendet. Meistens handelt es sich hier jedoch um kein reines Tantal, sondern um Legierungen, die zum Teil noch Wolfram enthalten.

Nachdem die Stahlplatte mit dem Tantal-Vollmaterial überzogen wurde, kann diese auf die Reparaturstelle im Behälter oder beim Behälterbestandteil aufgesetzt werden. Zwischen Reparaturstelle und der mit Tantal überzogenen Stahlplatte wird jedoch noch ein Abdichtungselement in Form einer Dichtungsplatte oder eines Dichtungsringes eingesetzt. Der Dichtungsring besteht erfindungsgemäß aus Polytetrafluorethen (PTFE), welches auch unter dem Markennamen "Teflon" bekannt ist. Vorzugsweise wird ein reines, originales PTFE in gereckter Faserstruktur verwendet. Die erfindungsgemäß verwendeten Dichtungsringe bzw. Dichtungsplatten weisen ein extrem geringes Setzverhalten auf. Sie passen sich ferner den Unebenheiten der Dichtflächen an der Reparaturstelle gut an und haben nach ausreichender Vorverformung eine hohe Druckstandfestigkeit. Aufgrund ihrer universellen Chemikalienbeständigkeit ist das PTFE-Material in nahezu allen Anwendungen einsetzbar. Insofern ist es für die unebenen Reparaturstellen in Behälterinnenräumen oder auch Behältereinlässen und -auslässen hervorragend geeignet. Die erfindungsgemäße Dichtungsplatte oder der Dichtungsring ist nahezu gegen alle Stoffe in einem pH-Bereich zwischen 0 und 14 beständig. Ausgenommen sind gelöste oder geschmolzene Alkali-Metalle sowie Elemente aus Fluor bei höheren Temperaturen und Drücken.

Damit die Restfließeigenschaften von PTFE auf ein Minimum verringert werden, wird das erfindungsgemäß verwendete PTFE vorzugsweise gepresst. Vorzugsweise wird das PTFE vor der Verarbeitung um etwa 50 % in dessen Stärke gepresst. Beispielsweise wird aus einer Schichtstärke von etwa 6 mm ein Material mit einer Schichtstärke von etwa 3 mm. Dadurch wird das Material dichter und etwaige Restfließeigenschaften werden verringert.

Die erfindungsgemäße Tantal-ummantelte Stahlplatte wird zusammen mit der Dichtungsplatte oder dem Dichtungsring aus PTFE an die Reparaturstelle aufgesetzt und mittels mit Schrauben-Dichtungsringen aus PTFE unterlegten Tantal-Schrauben befestigt. Die Tantal-Schrauben sind aus Tantal-Vollmaterial. Dadurch wird sichergestellt, dass auch die Befestigungsmittel selbst nicht angreifbar sind für die Produkte, Stoffzusammensetzungen oder Stoffe des Prozessbehälters. Zur Abdichtung werden unter die Tantal-Schrauben Schrauben-Dichtungsringe aus PTFE gelegt. Auch diese Schrauben-Dichtungsringe bestehen vorzugsweise aus gepresstem PTFE.

Die Tantal-Schrauben besitzen vorzugsweise einen an der Unterseite des Schraubenkopfes angeformten Druckring, welcher den Schrauben-Dichtungsring gegen die Tantal-ummantelte Stahlplatte drückt. Auf diese Weise wird eine dichte Verbindung sichergestellt und verhindert, dass Produktflüssigkeit in das Reparatur- und Abdichtungselement oder die Reparaturstelle gelangt.

Vorzugsweise werden der Dichtungsring oder die Dichtungsplatte sowie die Tantal-ummantelte Stahlplatte bei der Montage zunächst an der Bruchstelle fixiert und anschließend mit Heißluft behandelt. Dadurch sollen etwaige Restfließeigenschaften der PTFE-Dichtung vermindert werden. Die Fixierung erfolgt vorzugsweise mit Stahlschrauben, welche nach der Heißluftbehandlung nacheinander durch Tantal-Schrauben mit PTFE-Dichtungsringen ersetzt werden.

Das erfindungsgemäße Verfahren eignet sich nicht nur für Behälterinnenräume, Behälterbestandteile wie Rührwerke oder Umwälzwerke, sondern auch für Rohrleitungen oder Rohrbestandteile, welche an der Innenseite emailliert sind. Ferner eignet sich das Verfahren auch für Behältereinlässe oder Behälterauslässe. Erfindungsgemäß ist vorgesehen, dass bei solchen Reparaturstellen die Stahlplatte ein Ring ist, durch den ein Kragen aus Tantal zur Reparatur der beschädigten Stelle in dem Behälterauslass oder -einlass geführt ist, wobei wenigstens die Produktseite der Stahlplatte sowie deren Ränder mit Tantal ummantelt sind. Der hierfür verwendete Kragen besteht vollständig aus Tantal und deckt die Reparaturstelle in dem Einlass oder Auslass vollständig ab. Der Tantal-ummantelte Stahlplatten-Ring wird, wie oben beschrieben, um den Einlass- oder Auslassbereich an der Behälterwandung fixiert.

Die Erfindung betrifft ferner ein Reparatur- oder Abdichtungselement für emaillierte Behälter oder Behälterbestandteile, umfassend:
- a.: eine an die Form der beschädigten Stelle des Behälters oder des Behälterbestandteils angepasste Stahlplatte mit
- b.: einem Tantalüberzug , welcher wenigstens die Produktseite der Stahlplatte sowie deren Ränder vollständig ummantelt,
- c.: einen Dichtungsring oder eine Dichtungsplatte aus Polytetrafluorethen (PTFE) zwischen Behälterwandung und Tantal-ummantelter Stahlplatte,
- d.: Tantal-Schrauben zur Befestigung der Tantal-ummantelten Stahlplatte und des Dichtungsrings oder der Dichtungsplatte an die Behälterwand oder den Behälterbestandteil,
- e.: Schrauben-Dichtungsringe aus PTFE zwischen Tantal-Schrauben und Tantal- ummantelter Stahlplatte.

Vorzugsweise handelt es sich bei dem verwendeten PTFE um gepresstes PTFE. Ferner ist bevorzugt, dass an der Unterseite des Schraubenkopfes der Tantal-Schrauben ein Druckring ausgeformt ist, um den Zwischenraum zwischen Schraubenkopf der Tantalschraube sowie der Tantal-ummantelten Stahlplatte abzudichten.

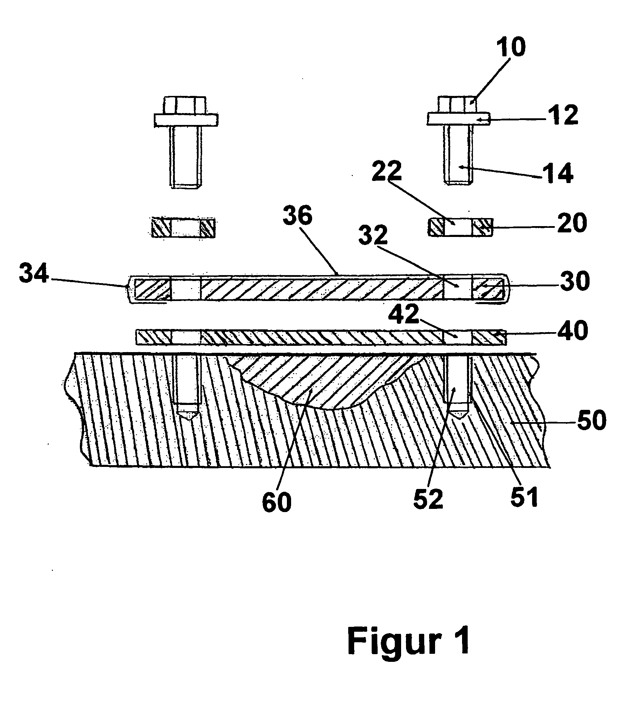

Die Erfindung wird in der nachfolgenden Zeichnung näher erläutert. Es zeigt
- Fig. 1: eine Ausführungsform eines erfindungsgemäßen Reparatur- oder Abdichtungselements.

In Fig. 1 ist der sandwichartige Aufbau des erfindungsgemäßen Reparatur- oder Abdichtungselements gezeigt. Zunächst wird um die Reparaturstelle 60 des Behälters bzw. Behälterbestandteils 50 ein Dichtungsring oder eine Dichtungsplatte 40 angelegt. Auf diesen Dichtungsring oder diese Dichtungsplatte 40 wird die mit einem Tantalüberzug 36 ummantelte Stahlplatte 30 aufgelegt. Deutlich ist zu sehen, dass der Tantalüberzug an den Rändern 34 der Stahlplatte 30 überzogen ist. Dadurch wird gewährleistet, dass keine Produktflüssigkeit in die Zwischenräume gelangen kann. Die Befestigung der Tantal-ummantelten Stahlplatte 30, 36 an die Behälterwandung erfolgt mittels Tantal-Schrauben 10. Zur Abdichtung sind Schrauben-Dichtungsringe 20 vorgesehen, welche ebenfalls aus gepresstem PTFE bestehen. Auf diese Weise wird verhindert, dass Produktflüssigkeit in die Schrauböffnungen gelangen kann. Der Schraubenschaft 14 wird über entsprechende Schrauböffnungen 22, 32, 42 der Dichtungsringe 20, 40 sowie der Tantal-ummantelten Stahlplatte 30, 36 geführt. Zur Befestigung werden um die Reparaturstelle 60 Gewindelöcher 51 eingebracht. Zur temporären Fixierung und Behandlung mit Heißluft des Reparatur- und Abdichtungselements können Stahlschrauben 52 verwendet werden.

Damit der Schrauben-Dichtungsring 20 fest an der Tantal-ummantelten Stahlplatte 30, 36 ansitzt, ist an der Unterseite des Schraubenkopfes der Tantal-Schraube 10 ein Druckring 12 ausgeformt. Beim Anziehen der Tantal-Schrauben 10 werden die einzelnen Dichtungsringe zusammengedrückt und etwaige Zwischenräume dicht verschlossen.

Das erfindungsgemäße Reparatur- oder Abdichtungselement weist eine Reihe von Vorteilen auf. Zum einen ist die Chemikalienbeständigkeit zu erwähnen, welche auf die verwendeten Materialien, insbesondere Teflon sowie PTFE, zurückzuführen ist. Ferner wird ein hoher Grad an Dichtigkeit erreicht, indem sowohl die Tantal-Schrauben 10 als auch die Tantal-ummantelte Stahlplatte 30, 36 mit Dichtungsringen 20, 40 abgedichtet werden. Da Tantal als Edelmetall sehr teuer ist, stellt die Verwendung einer Stahlplatte 30 sowie eine eigene Ummantelung 36 eine innovative Alternative zu einer Tantal-Platte aus Vollmaterial dar. Durch den erfindungsgemäßen sandwichartigen Aufbau wird die Reparaturstelle optimal bedeckt und vor weiteren Angriffen durch Produktflüssigkeit geschützt.

## Patentansprüche

1. Verfahren zur Instandsetzung beschädigter emaillierter Behälter oder Behälterbestandteile (50), bei dem zunächst von der beschädigten Stelle des Behälters oder des Behälterbestandteils ein Formabdruck zur Erstellung eines Negativs angefertigt wird, mit diesem Negativ zur Herstellung eines sandwichartig aufgebauten Abdichtungs- oder Reparaturelementes zunächst eine Stahlplatte (30) an die Formgebung des Negativs mechanisch angepasst wird, die Stahlplatte (30) zumindest auf der Produktseite und an deren Rändern (34) mit einem Tantalüberzug (36) rissfrei ummantelt wird, und die Tantal-Stahlplatte (30, 36) zusammen mit einer Dichtungsplatte oder Dichtungsring (40) aus Polytetrafluorethen (PTFE) mittels mit Schrauben-Dichtungsringen (20) aus PTFE unterlegten Tantal-Schrauben (10) an der beschädigten Stelle des Behälters oder des Behälterbestandteils (50) befestigt wird.

2. Verfahren nach Anspruch 1, **dadurch gekennzeichnet, dass** die Dichtungsplatte oder der Dichtungsring und/oder die Schrauben-Dichtungsringe aus gepresstem PTFE hergestellt sind.

3. Verfahren nach Anspruch 2, **dadurch gekennzeichnet, dass** das PTFE vor der Verarbeitung um etwa 50% in dessen Stärke gepresst wird.

4. Verfahren nach einem der Ansprüche 1 bis 3, wobei das Reparatur- und Abdichtungselement **gekennzeichnet ist durch** die Merkmale:
a. eine an die Form der beschädigten Stelle des Behälters oder des Behälterbestandteils (50) angepasste Stahlplatte (30) mit
b. einem Tantal-Überzug (36), welcher zumindest die zum Behälterinneren weisende Seite der Stahlplatte (30) sowie deren Ränder (34) vollständig ummantelt,
c. zwischen Behälterwandung und Tantal-ummantelter Stahlplatte (30, 36) befindet sich im Montagezustand ein Dichtungsring oder eine Dichtungsplatte (40) aus gepresstem Polytetrafluorethen (PTFE),
d. die Tantal-ummantelte Stahlplatte (30, 36) und der Dichtungsring oder die Dichtungsplatte (40) werden im Montagezustand mit Tantal-Schrauben (10) an die Behälterwand oder den Behälterbestandteil (50) befestigt,
e. der Schraubenkopf der Tantal-Schrauben (10) ist über der Tantal-ummantelten Stahlplatte (30, 36) mit Dichtungsringen (20) aus gepresstem PTFE unterlegt.

5. Verfahren nach einem der Ansprüche 1 bis 4, **dadurch gekennzeichnet, dass** an der Unterseite des Schraubenkopfes der Tantal-Schrauben (10) ein Druckring (12) ausgeformt ist.

6. Verfahren nach einem der Ansprüche 1 bis 5, **dadurch gekennzeichnet, dass** der Dichtungsring oder die Dichtungsplatte (40) und die Tantal-ummantelte Stahlplatte (30, 36) bei der Montage zunächst an der Bruchstelle fixiert und anschließend mit Heißluft behandelt werden.

7. Verfahren nach einem der Ansprüche 1 bis 6, **dadurch gekennzeichnet, dass** der Formabdruck an der beschädigten Stelle mittels Gipsabdruck erfolgt.

8. Verfahren nach einem der Ansprüche 1 bis 7, **dadurch gekennzeichnet, dass** die Stahlplatte (30) ein Ring ist, durch den ein Kragen aus Tantal zur Reparatur einer beschädigten Stelle in einem Behälterauslass oder -einlass geführt wird, wobei wenigstens die Produktseite der Stahlplatte (30) sowie deren Ränder (34) mit Tantal ummantelt sind.

9. Verfahren nach einem der Ansprüche 1 bis 7, **dadurch gekennzeichnet, dass** es sich bei dem emaillierten Behälterbestandteil um ein Teil eines Rührwerks oder eines Umwälzwerks handelt.

10. Reparatur- oder Abdichtungselement für emaillierte Behälter oder Behälterbestandteile (50), umfassend:
a. eine an die Form der beschädigten Stelle des Behälters oder des Behälterbestandteils (50) angepasste Stahlplatte (30) mit
b. einem Tantalüberzug (36), welcher wenigstens die Produktseite der Stahlplatte (30) sowie deren Ränder (34) vollständig ummantelt,
c. einen Dichtungsring oder eine Dichtungsplatte (40) aus Polytetrafluorethen (PTFE) zwischen Behälterwandung und Tantal-ummantelter Stahlplatte (30, 36),
d. Tantal-Schrauben (10) zur Befestigung der Tantal-ummantelten Stahlplatte (30, 36) und des Dichtungsrings oder der Dichtungsplatte (40) an die Behälterwand oder den Behälterbestandteil (50),
e. Schrauben-Dichtungsringe (20) aus PTFE zwischen Tantal-Schrauben (10) und Tantal-ummantelter Stahlplatte (30, 36).

11. Reparatur- oder Abdichtungselement nach Anspruch 10, **dadurch gekennzeichnet, dass** es sich bei dem PTFE um gepresstes PTFE handelt.

12. Reparatur- oder Abdichtungselement nach Anspruch 10 oder 11, **dadurch gekennzeichnet, dass** an der Unterseite des Schraubenkopfes der Tantal-Schrauben (10) ein Druckring (12) ausgeformt ist.
